# EUROPÄISCHE PATENTANMELDUNG

(11) **EP 1 101 990 A1**
(43) Veröffentlichungstag der Anmeldung: **23.05.2001**
(21) Anmeldenummer: 00811059.5
(22) Anmeldetag: 10.11.2000
(51) Int. Cl.: F16L 5/02, F16L 5/08, H02G 3/22

(54) **Verfahren und Vorrichtung zur Spaltabdichtung**

(30) Priorität: 19.11.1999 DE 19955764
(71) Anmelder: HILTI Aktiengesellschaft, 9494 Schaan (LI)
(72) Erfinder: Kögler, Markus, 86807 Buchloe (DE); Huber, Silvia, 86356 Neusäss (DE); Heimpel, Franz, 86444 Affing (DE); Vogel, Peter, 86836 Untermeitingen (DE)
(74) Vertreter: Wildi, Roland

(57) **Zusammenfassung**

Zum Abdichten eines Spalts (4) zwischen einer in einem Bauelement (1) vorhandenen Durchführung (2) und einem die Durchführung (2) durchragenden Gegenstand (3) wird in den Spalt (4) ein elastisch ausgebildetes Abdichtelement (6) eingesetzt und durch eine Spannvorrichtung (7) in Axialrichtung der Durchführung (2) so zusammengepresst, daß es sich senkrecht zur Längsrichtung der Durchführung (2) ausdehnt und dadurch den Spalt (4) abdichtet.

## Beschreibung

Die Erfindung betrifft ein Verfahren gemäß dem Oberbegriff des Patentanspruchs 1 zum Abdichten eines Spalts zwischen einer in einem Bauelement vorhandenen Durchführung und einem die Durchführung durchragenden Gegenstand durch Anordnen wenigstens eines Abdichtelements im Spalt, sowie eine für diesen Zweck geeignete Vorrichtung gemäß dem Oberbegriffs den Patentanspruchs 3.

Abdichtungen kommen häufig in Hauseinführungen zum Einsatz, bei denen Rohre oder Kabel von außen nach innen durch Öffnungen in Wänden geführt werden. Ein dabei entstehender Ringspalt zwischen Rohr bzw. Kabel und Wand läßt sich auf verschiedene Weise verschließen. Zum einen kommen hierfür mechanische Abdichtungen in Frage. Hier füllen feste Dichtelemente den Ringspalt aus und dichten über Formschluß oder durch elastische Verpressung zum Untergrund ab. Andererseits können auch chemische Abdichtungen zum Einsatz kommen. Der Ringspalt wird dabei mit reaktiven Systemen ausgefüllt, die aushärten und die Durchführung verschließen. Als reaktive Systeme können z.B. anorganische Systeme, z.B. Mörtel, oder organische Systeme verwendet werden, etwa Dichtmassen, Polymerschäume, usw. Nicht zuletzt können aber auch chemisch - mechanische Abdichtungen verwendet werden. Bei ihnen wird in der Regel eine mechanische Verschalung vorgenommen, die ein chemisches Füllsystem aufnimmt.

Die bekannten mechanischen Lösungen sind teuer-, zeit- und arbeitsaufwendig bei der Installation sowie auf bestimmte Rohr- und Kabeldurchmesser sowie Durchführungsdurchmesser fixiert. Chemische Lösungen haben diese Nachteile nicht, gewährleisten jedoch keine dauerhafte Abdichtung gegen eintretenes Wasser. Dies liegt zum einen häufig an der Durchlässigkeit des Materials selbst, wenn z.B. offenzellige Schäume zum Einsatz kommen, sowie an der mangelnden Haftung auf verschiedenen kritischen Untergründen, wie etwa PE. Darüber hinaus besteht noch die Gefahr, daß der Anwender die Durchführung nicht vollständig verschließt.

Der Erfindung liegt die Aufgabe zugrunde, ein Verfahren und eine Vorrichtung der eingangs genannten Art so weiterzubilden, daß eine vollständige Abdichtung des Spalts durch einfache und kostengünstige Maßnahmen und auch schnell zu erreichen ist.

Die verfahrensseitige Lösung der gestellten Aufgabe ist im kennzeichnenden Teil des Patentanspruchs 1 angegeben. Dagegen findet sich die vorrichtungsseitige Lösung der gestellten Aufgabe im kennzeichnenden Teil des Patentanspruchs 3. Vorteilhafte Ausgestaltungen der Erfindung sind den jeweils nachgeordneten Unteransprüchen zu entnehmen.

Ein erfindungsgemäßes Verfahren zum Abdichten eines Spalts zwischen einer in einem Bauelement vorhandenen Durchführung und einem die Durchführung durchragenden Gegenstand durch Anordnen wenigstens eines Abdichtelements im Spalt, das den Gegenstand umgibt, zeichnet sich dadurch aus, daß das Abdichtelement elastisch ausgebildet ist und durch eine Spannvorrichtung in Axialrichtung der Durchführung zusammengepresst und der zusammengepresste Zustand fixiert wird.

Wird z.B. das Abdichtelement zunächst in die Durchführung eingesetzt und anschließend der Gegenstand durch das Abdichtelement hindurchgeschoben, kann anschließend mittels der Spannvorrichtung das Abdichtelement in Axialrichtung zur Durchführung zusammengepreßt werden, wodurch es sich radial nach außen ausdehnt und damit gegen die Umfangswandung der Durchführung drückt. Gleichzeitig drückt das Abdichtelement dann auch radial nach innen gegen den Gegenstand, so daß sowohl in Richtung zum Bauelement als auch in Richtung zum Gegenstand jeglicher Spalt dicht verschlossen wird. Der zusammengepreßte Zustand des Abdichtelements bleibt dann erhalten, indem die Spannvorrichtung fixiert bzw. arretiert wird.

Die Erfindung stellt somit eine sehr wirksame und effektive Möglichkeit der Spaltabdichtung zur Verfügung, zumal in gewissen Grenzen auch unterschiedlich große Durchführungen dicht verschlossen werden können, da die hierzu erforderliche radiale Ausdehnung des Abdichtelements durch entsprechenden Druck beim Zusammenpressen des Abdichtelements in Axialrichtung der Durchführung einstellbar ist. Durch den Einsatz der Erfindung lassen sich darüber hinaus Kosten reduzieren, da sich ein erheblicher Zeitvorteil bei der Installation ergibt.

In Ausgestaltung der Erfindung können nach dem Fixieren des zusammengepreßten Zustands des Abdichtelements Teile der Spannvorrichtung wieder aus der Durchführung herausgenommen werden, wenn diese nicht zur Aufrechterhaltung des fixierten bzw. zusammengepreßten Zustands benötigt werden. Es kann sich hier z.B. um mit Grifflaschen versehende Teile von Zugstangen handeln, mit deren Hilfe die in Axialrichtung der Durchführung einander gegenüberliegenden Flächen des Abdichtelements aufeinanderzu bewegt worden sind. Sollen diese Teile der Zugstangen nicht aus der Durchführung herausstehen, können diese z.B. im Bereich von Sollbruchstellen entfernt werden.

Eine erfindungsgemäße Vorrichtung zumAbdichten eines Spalts zwischen einer in einem Bauelement vorhandenen Durchführung und einem die Durchführung durchragenden Gegenstand kennzeichnet sich aus durch ein elastisches Abdichtelement mit einer zur passenden Aufnahme des Gegenstandes geeigneten Durchgangsöffnung und durch eine mit dem Abdichtelement verbundene Spannvorrichtung zum Zusammenpressen des Abdichtelements in Axialrichtung der Durchgangsöffnung.

Abdichtelement und Spannvorrichtung bilden eine Montageeinheit und können z.B. gemeinsam in eine Durchführung eines Bauelements eingesetzt werden. Nach dem Durchführen des z.B. als Kabel oder Rohr ausgebildeten Gegenstandes durch das Abdichtelement hindurch wird die Spannvorrichtung betätigt und das Abdichtelement in Axialrichtung der Durchführung zusammengepreßt. Dadurch dehnt sich das Abdichtelement in Radialrichtung aus und drückt somit sowohl gegen den Gegenstand als auch gegen die Umfangswandung der Durchführung, was zu einer dichten und insbesondere auch flüßigkeitsundurchläßigen Abdichtung führt.

Besonders gute Dichtergebnisse wurden bei Verwendung eines als Ball ausgebildeten Abdichtelements erhalten, der mit einer zylindrischen und zentrisch zu ihm liegenden Durchgangsöffnung zur Aufnahme von Kabeln bzw. Rohren versehen war. Durch axiales Zusammenpressen der Wandbereiche des Balls in der Nähe des Kabels bzw. Rohres konnte eine gute radiale Ausdehnung erhalten werden, also eine Ausdehnung senkrecht zur Längsachse des Kabels bzw. Rohres.

Das Abdichtelements kann nach einer Ausgestaltung der Erfindung aus Vollmaterial oder aus einem Material mit Hohlkammern bestehen. Es ist in allen Fällen elastisch komprimierbar. Im zuerst genannten Fall lassen sich relativ hohe Anpresskräfte erzeugen, was vorteilhaft ist, wenn z.B. gegenüber Druckwasser abgedichtet werden soll. Im zuletzt genannten Fall besteht die Möglichkeit, mit geringeren Anpresskräften arbeiten zu können.

Vorzugsweise besteht das Abdichtelement aus wasserdichtem bzw. wasserfestem Material,um eine dauerhafte Wirkung der Abdichtung zu erreichen.

Nach einer sehr vorteilhaften Ausgestaltung der Erfindung weist die Spannvorrichtung an in Axialrichtung der Durchgangsöffnung gegenüberliegenden Bereichen des Abdichtelements Stellenelemente auf, die jeweils nahe der Durchgangsöffnung aufeinanderzu bewegbar sind. Die Stellenelemente lassen sich durch verschiedene Mechanismen antreiben und dienen dazu, daß Abdichtelement in Axialrichtung der Durchgangsöffnung zusammenzupressen. Sie lassen in radialer Richtung des Abdichtelements genügend Platz frei, so daß sich das Abdichtelement in dieser Richtung ausdehnen kann, wenn es in Axialrichtung zusammengedrückt wird.

Vorzugsweise sind die Stellelemente als umlaufende Elemente oder Ringe ausgebildet, um über den Umfang der Durchgangsöffnung möglichst gleichmäßig Druckkraft auf das Abdichtelement einwirken lassen zu können. Dies sorgt für eine gleichmäßigere Radialausdehnung des Abdichtelements und damit für eine sichere Abdichtung der Durchführung. Wie bereits erwähnt gibt es zum Antrieb der Stellelemente meherer Möglichkeiten. Eine besteht darin, zwischen den in Axialrichtung voneinander beabstandeten Stellelementen Axialschrauben vorzusehen, die das Abdichtelement durchsetzen. Die Axialschrauben hintergreifen mit ihrem Kopf ein vorderes Stellelement und sind mit ihrem Gewindeabschnitt in ein hinteres Stellelement eingeschraubt. Bei Drehung der Schrauben etwa mit einem Schraubendreher lassen sich dann vorderes und hinteres Stellelement aufeinanderzu bewegen, wodurch das Abdichtelement zusammengedrückt wird. Mehrere derartige Schrauben können in Umfangsrichtung des Abdichtelements unter gleichen Winkelabständen voneinander angeordnet sein.

Eine andere Möglichkeit zur Verstellung der Stellelemente besteht darin, Zugstangen vorzusehen, die das Abdichelement durchsetzen. Am vorderen Stellelement sind erste Zugstangen angebracht, die aus der Durchführung herausragen. Am hinteren Stellelement sind zweite Zugstangen angebracht, die das Abdichtelement durchsetzen und ebenfalls aus der Durchführung herausragen, und zwar in Richtung der ersten Zugstangen. Die ersten und die zweiten Zugstangen sind jeweils mit Grifflaschen versehen. Werden über die Grifflaschen die Zugstangen relativ zueinander bewegt, kann dadurch ein Zusammenpressen des Abdichtelements über die Stellelemente erreicht werden. Dabei können die Zugstangen auch über einen Ratschenmechanismus arretierbar sein, um eine zusammengepresste Stellung des Abdichtelements fixieren zu können.

Prinzipiell wäre es auch möglich, die Zugstangen, die das Abdichtelement durchsetzen, über Exzenter anzutreiben, die sich an einem der Stellelemente abstützen.

Auch besteht die Möglichkeit, die Stellelemente durch wenigstens eine zwischen ihnen liegende Zugfeder aufeinanderzu zu bewegen, nachdem eine Verschiebesperre der Stellelemente aufgehoben worden ist.

Schließlich könnte man auch an eine zentrale Verschraubung der Stellelemente denken, derart, daß z.B. durch eine koaxial zur Durchgangsöffnung liegende Mutter, durch die ebenfalls das Rohr bzw. Kabel hindurchgeführt wird, die in Axialrichtung voneinander beabstandeten Stellelemente aufeinanderzu bewegt werden können.

Ausführungsbeispiele der Erfindung werden nachfolgend unter Bezugnahme auf die Zeichnung näher beschrieben. Es zeigen:
Figur 1 eine perspektivische Ansicht auf eine Abdichtvorrichtung mit ballförmigem Abdichtelement, das noch nicht zusammengepreßt worden ist;
Figur 2 einen Axialschnitt durch die Abdichtvorrichtung nach Figur 1;
Figur 3 eine perspektivische Ansicht auf die Abdichtvorrichtung nach Figur 1 bei jetzt zusammengepresstem Abdichtelement;
Figur 4 einen Axialschnitt durch die Abdichtvorrichtung im Zustand nach Figur 3,
Figur 5 ein zweites Ausführungsbeispiel einer erfindungsgemäßen Abdichtvorrichtung mit Exzentern und noch nicht zusammengepresstemAbdichtelement; und
Figur 6 die Abdichtvorrichtung nach Figur 5 bei zusammengepresstem Abdichtelement.

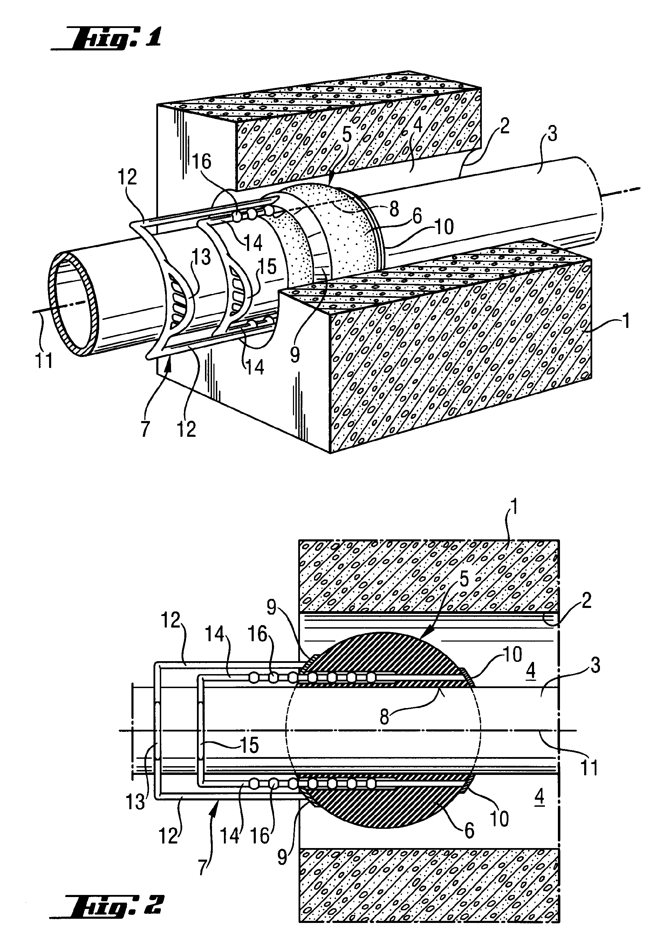

Die Figur 1 zeigt ein Bauelement 1, das z.B. die Wand eines Hauses sein kann. Innerhalb des Bauelements 1 befindet sich eine senkrechte zur Wandfläche verlaufende Durchführung 2, etwa eine Durchgangsbohrung mit vergleichsweise konstantem Innendurchmesser. Durch die Durchführung 2 hindurch verläuft ein Gegenstand 3, der im vorliegendem Fall ein Rohr ist, aber auch ein Kabel sein könnte. Der Außendurchmesser des Gegenstandes 3 ist etwas kleiner als der Innendurchmesser der Durchführung 2, so daß sich zwischen Rohr 3 und Bauelement 1 ein Ringspalt 4 ergibt.

Die Verhältnisse in Figur 1 sind anhand des Axialschnitts in Figur 2 entsprechend dargestellt.

Auf dem Gegenstand 3 und im Bereich der Durchführung 2 befindet sich eine erfindungsgemäße Abdichtvorrichtung 5. Die Abdichtvorrichtung 5 besteht aus einem ballförmigen Abdichtelement 6 und aus einer Spannvorrichtung 7. Dabei bilden Abdichtelement 6 und Spannvorrichtung 7 eine Montageeinheit.

Wie insbesondere anhand der Figur 2 zu erkennen ist, weist das ballförmige Abdichtelement 6 eine zylindrische Durchgangsöffnung 8 auf, die zentral zum Abdichtelement 6 liegt. In diese zylindrische Durchgangsöffnung 8 ist das Rohr 3 passend eingesetzt. Der Außendurchmesser des Rohres 3 entspricht somit wenigstens annähernd dem Innendurchmesser der Durchgangsöffnung 8. Der Außendurchmesser des ballförmigen Abdichtelements 6 ist dagegen etwas geringer als der Innendurchmesser der Durchführung 2, so daß die Abdichtvorrichtung 5 leicht in die Durchführung 2 hineingeschoben werden kann.

Die Spannvorrichtung 7 besteht zunächst gemäß Figur 2 aus einem vorderen Stellring 9 und aus einem hinteren Stellring 10, die koaxial zur Längsachse 11 der Durchgangsöffnung 8 liegen, wobei die Längsachse 11 auch die Längsachse der Durchführung 2 ist. Beide Stellringe 9 und 10 können mit dem ballförmigen Abdichtelement 6 fest verbunden sein, z.B. verklebt. Vom vorderen Stellring 9 stehen nach links in den Figuren 1 und 2 erste Zugstangen 12 ab. Dabei können mehrere in Umfangsrichtung des vorderen Stellrings 9 unter gleichen Winkelabständen liegende erste Zugstangen 12 vorhanden sein, die parallel zur Längsachse 11 verlaufen und an ihrem freien Ende über eine erste Grifflasche 13 miteinander verbunden sind. Dagegen sind mit dem hinteren Stellring 10 zweite Zugstangen 14 fest verbunden, die das ballförmige Abdichtelement 6 in Richtung des vorderen Stellrings 9 durchsetzen und ebenfalls parallel zur Längsachse 11 verlaufen. Auch hier können mehrere unter gleichen Winkelabständen in Umfangsrichtung des hinteren Stellrings 10 angeordnete zweite Zugstangen vorhanden sein. An ihrem in Figur 2 links liegenden freien Ende sind die zweiten Zugstangen ebenfalls miteinander verbunden, und zwar über eine zweite Grifflasche 15. Vorzugsweise sind jeweils nur zwei erste und zwei zweite Zugstangen 12 bzw. 14 vorhanden, um einen möglichst einfachen Aufbau der Spannvorrichtung zu erhalten. Die ersten und die zweiten Zugstangen 12, 14 sind so lang, daß sie zur selben Wandseite aus der Durchführung 2 herausragen, wie in Figur 2 gezeigt. Dabei liegt die erste Grifflasche 13 jedoch weiter von der Wand 1 entfernt als die zweite Grifflasche 15. Beide Grifflaschen 13, 15 befinden sich somit unter einemAbstand zueinander in Längsrichtung der Achse 11.

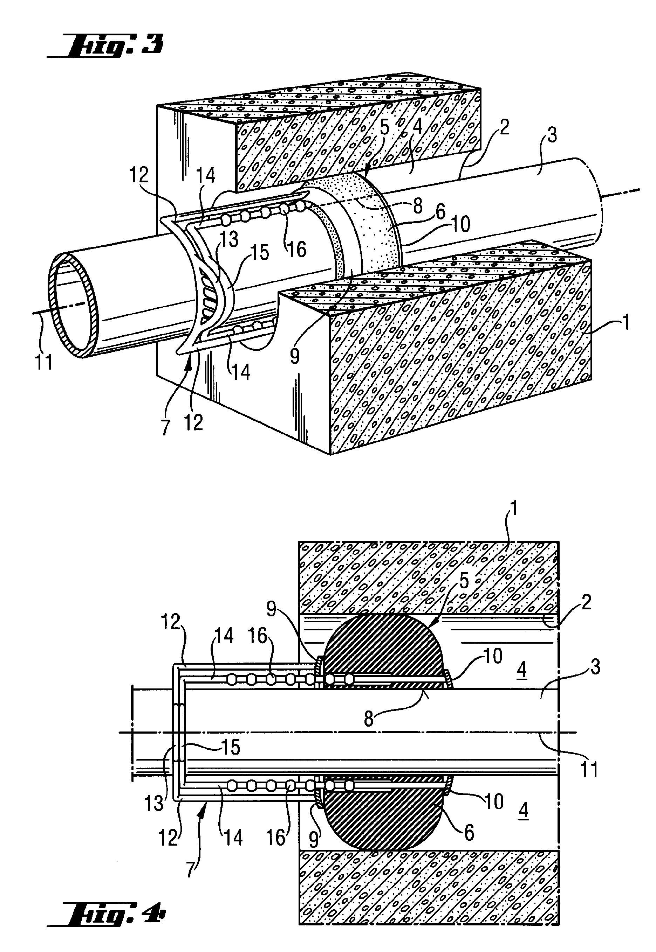

Werden nach Montage der Abdichtvorrichtung 5 gemäß den Figuren 1 und 2 die erste und die zweite Grifflasche 13, 15 aufeinanderzu bewegt, so werden auch die mit ihnen verbundenen Stellringe 9 und 10 aufeinanderzu bewegt, die konzentrisch zur Längsachse 11 liegende ringförmige Abschnitte des ballförmigen Abdichtelements 6 beaufschlagen, so daß das ballförmige Abdichtelement 6 in diesem Bereich zusammengedrückt wird. Der sich ergebende Zustand ist in den Figuren 3 und 4 dargestellt, in denen die gleichen Elemente wie in den Figuren 1 und 2 mit den gleichen Bezugszeichen versehen sind und nicht nochmals beschrieben werden. Wie insbesondere die Figur 4 erkennen läßt, wurde das ballförmige Abdichtelement 6 über die Stellringe 9 und 10 soweit zusammengepreßt, daß es sich in einer Richtung senkrecht zur Längsachse 11 der Durchgangsöffnung 8 bis zur Innenwand der Durchführung 2 ausgedehnt hat und gegen diese Innenwand presst. Gleichzeitig drückt das ballförmige Abdichtelement 6 auch gegen den Gegenstand 3, so daß auf diese Weise der Ringspalt 4 dicht verschlossen wird.

Wie insbesondere in Figur 2 und 4 weiter zu erkennen ist, ist die Spannvorrichtung 7 auch mit einem Ratschenmechanismus versehen. Hierzu sind die zweiten Zugstangen 14 mit im Abstand voneinander liegenden kugelförmigen Abschnitten 16 versehen, die durch passend ausgebildete Rastöffnungen im vorderen Stellring 9 hindurchgezogen werden müssen, wenn die Grifflaschen 13 und 15 von der in Figur 2 gezeigten Stellung in die in Figur 4 gezeigte Stellung überführt werden sollen. In dieser Verschieberichtung können die kugelförmigen Abschnitte 16 leichter durch die Rastöffnungen hindurchgezogen werden als in der entgegengesetzten Richtung, so daß sich auf diese Weise über die kugelförmigen Abschnitte 16 die Verschiebestellung der Grifflaschen 13 und 15 zueinander arretieren läßt.

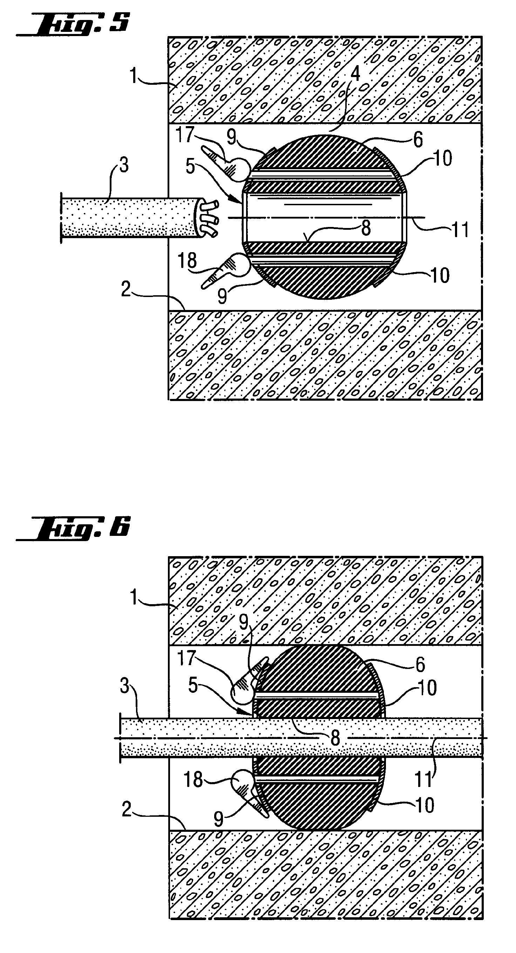

Ein zweites Ausführungsbeispiel einer erfindungsgemäßen Abdichtvorrichtung 5 ist in den Figuren 5 und 6 dargestellt. Gleiche Elemente wie in den Figuren 1 bis 4 sind wiederum mit den gleichen Bezugszeichen versehen und werden nicht nochmals beschrieben.

Beim zweiten Ausführungsbeispiel nach den Figuren 5 und 6 sind der vordere Stellring 9 und der hintere Stellring 10 über exzentrische Stellhebel 17, 18 relativ zueinander verschiebbar, und zwar wiederum in Längsrichtung der Längsachse 11. Die Figur 5 zeigt dabei einen Zustand, in welchem die Stellringe 9 und 10 noch nicht aufeinanderzu bewegt worden sind, so daß das ballförmige Abdichtelement 6 noch nicht deformiert worden ist. Dagegen zeigt die Figur 6 den Zustand nach Verschieben der Stellringe 9 und 10 aufeinander zu und mit derart deformiertem Abdichtelement 6, daß es nunmehr sowohl gegen die Innenumfangswandung der Durchführung 2 als auch gegen das Kabel 3 gepresst wird. Der Verschiebemechanismus zur Verschiebung der Stellringe 9 und 10 aufeinanderzu unter Einsatz der exzentrischen Stellhebel 17 und 18 ist hier nur schematisch dargestellt, läßt sich jedoch in verschiedener Weise ohne Schwierigkeiten technisch realisieren. Befinden sich die exzentrischen Stellhebel 17, 18 in ihrer unverschwenkten bzw. Ruhestellung, so kann die Abdichtvorrichtung 5 in der Durchführung 2 positioniert werden. Nach Einführen des Gegenstandes 3 in die Durchgangsöffnung 8 werden dann die exzentrischen Stellhebel 17, 18 aus ihrer Ruhestellung in ihre Arbeitsstellung überführt und bewegen dabei die Stellringe 9 und 10 aufeinander zu. Dies führt zu der bereits erwähnten Deformation des ballförmigen Abdichtelements 6 und damit zum Verschluß des Ringspalts 4. In ihrer Arbeitsstellung sind die exzentrischen Stellhebel 17 und 18 selbsthaltend verklemmt, so daß die Verschiebestellung der Stellringe 9 und 10 arretiert bleibt.

## Patentansprüche

1. Verfahren zum Abdichten eines Spalts (4) zwischen einer in einem Bauelement (1) vorhandenen Durchführung (2) und einem die Durchführung (2) durchragenden Gegenstand (3) durch Anordnen wenigstens eines Abdichtelements (6) im Spalt (4), das den Gegenstand (3) umgibt, **dadurch gekennzeichnet,** daß das Abdichtelement (6) elastisch ausgebildet ist und durch eine Spannvorrichtung (7) in Axialrichtung der Durchführung (2) zusammengepresst wird und der zusammengepresste Zustand fixiert wird.

2. Verfahren nach Anspruch 1, **dadurch gekennzeichnet,** daß nach dem Fixieren des zusammengepreßten Zustands des Abdichtelements (6) Teile der Spannvorrichtung (7) wieder aus der Durchführung (2) herausgenommen werden.

3. Vorrichtung zum Abdichten eines Spalts (4) zwischen einer in einem Bauelement (1) verhandenen Durchführung (2) und einem die Durchführung (2) durchragenden Gegenstand (3), **gekennzeichnet durch** ein elastisches Abdichtelement (6) mit einer zur passenden Aufnahme des Gegenstands (3) geeigneten Durchgangsöffnung (8), und durch eine mit dem Abdichtelement (6) verbundene Spannvorrichtung (7) zum Zusammenpressen des Abdichtelement (6) in Axialrichtung der Durchgangsöffnung (8).

4. Vorrichtung nach Anspruch 3, **dadurch gekennzeichnet,** daß das Abdichtelement (6) als Ball ausgebildet ist.

5. Vorrichtung nach Anspruch 4, **dadurch gekennzeichnet,** daß der Ball (6) eine zylindrische Durchgangsöffnung (8) aufweist, die zentrisch zu ihm liegt.

6. Vorrichtung nach einem der Ansprüche 3 bis 5, **dadurch gekennzeichnet,** daß das Abdichtelement (6) aus Vollmaterial besteht.

7. Vorrichtung nach einem der Ansprüche 3 bis 7, **dadurch gekennzeichnet,** daß das Abdichtelement (6) mit Hohlkammern ausgestattet ist.

8. Vorrichtung nach einem der Ansprüche 3 bis 7, **dadurch gekennzeichnet,** daß das Abdichtelement (6) aus wasserdichtem Material besteht.

9. Vorrichtung nach einem der Ansprüche 3 bis 8, **dadurch gekennzeichnet,** daß die Spannvorrichtung (7) an in Axialrichtung der Durchgangsöffnung (8) gegenüberliegenden Bereichen des Abdichtelements (6) Stellelemente (9, 10) aufweist, die wenigstens nahe der Durchgangsöffnung (8) aufeinander bewegbar sind.

10. Vorrichtung nach Anspruch 9, **dadurch gekennzeichnet,** daß die Stellelemente (9, 10) Ringe sind.

11. Vorrichtung nach Anspruch 9 oder 10, **dadurch gekennzeichnet,** daß die Stellelemente (9, 10) durch zwischen ihnen liegende Axialschrauben aufeinanderzu bewegbar sind, die das Abdichtelement (6) durchsetzen.

12. Vorrichtung nach Anspruch 9 oder 10, **dadurch gekennzeichnet,** daß die Stellelemente (9, 10) durch zwischen ihnen liegende Zugstangen (14) aufeinanderzu bewegbar sind, die das Abdichtelement (6) durchsetzen.

13. Vorrichtung nach Anspruch 12, **dadurch gekennzeichnet,** daß die Zugstangen (14) über einen Ratschenmechanismus (16) arretierbar sind.

14. Vorrichtung nach Anspruch 12, **dadurch gekennzeichnet,** daß die Zugstangen (14) über Exzenter (16, 17) antreibbar sind.

15. Vorrichtung nach Anspruch 9 oder 10, **dadurch gekennzeichnet,** daß die Stellenelemente (9, 10) durch wenigstens eine zwischen ihnen liegende Zugfeder aufeinanderzu bewegbar sind, nachdem eine Verschiebsperre der Stellenelemente (9, 10) aufgehoben worden ist.

16. Vorrichtung nach Anspruch 9 oder 10, **dadurch gekennzeichnet,** daß die Stellelemente (9, 10) durch eine zentrale Verschraubung aufeinanderzu bewegbar sind.
